# EUROPÄISCHE PATENTSCHRIFT

(11) **EP 1 511 010 B1**
(45) Veröffentlichungstag und Bekanntmachung des Hinweises auf die Patenterteilung: **12.09.2007**
(21) Anmeldenummer: 04013378.7
(22) Anmeldetag: 07.06.2004
(51) Int. Cl.: G10L 15/20

(54) **Steuerung einer Mikrofon-Anordnung durch Rückkopplungsignal aus einem Spracherkennungssystem und Spracherkennung unter Verwendung dieser Anordnung**
Control of a microphone array using feedback of a speech recognition system, and speech recognizion using said array
Contrôle d'un réseau de microphones utilisant un couplage rétroactif avec un système de reconnaissance de parole et reconnaissance de parole utilisant ce réseau

(30) Priorität: 29.08.2003 DE 10339973
(43) Veröffentlichungstag der Anmeldung: 02.03.2005
(73) Patentinhaber: DaimlerChrysler AG, 70327 Stuttgart (DE)
(72) Erfinder: Kaltenmeier, Alfred Dr.Ing, 89075 Ulm (DE); Linhard, Klaus Dr.Ing, 89601 Schelklingen (DE)

(56) Entgegenhaltungen:
- EP-A- 1 081 682
- US-A- 5 684 924
- US-A- 6 122 613
- SHIMIZU Y ET AL: "Speech recognition based on space diversity using distributed multi-microphone" IEEE ICASSP 2000, Bd. 3, 5. Juni 2000 (2000-06-05), Seiten 1747-1750, XP010507697
- SELTZER M L ET AL: "Speech recognizer-based microphone array processing for robust hands-free speech recognition" 2002 IEEE INTERNATIONAL CONFERENCE ON ACOUSTICS, SPEECH, AND SIGNAL PROCESSING. PROCEEDINGS (CAT. NO.02CH37334) IEEE PISCATAWAY, NJ, USA, Bd. 1, 13. Mai 2002 (2002-05-13), - 17. Mai 2002 (2002-05-17) Seiten 897-900, XP002310104 ORLANDO FL ISBN: 0-7803-7402-9

## Beschreibung

Die Erfindung betrifft ein intelligentes akustisches Mikrofon-Frontend und ein Verfahren zum Betrieb eines solchen nach dem Oberbegriff der Patentansprüche 1 und 6.

In modernen Kraftfahrzeugen werden zunehmend Systeme installiert, welche über Spracheingabe bedient werden können. Hierbei sollen solche Systeme durch unterschiedliche Fahrzeuginsassen aus unterschiedlichen Positionen bedienbar sein. Auch ist es Ziel, im Rahmen moderner Insassenkommunikationsanlagen die einzelnen Plätzen im Fahrzeuginnenraum mit diesen spezifisch zugeordneten Mikrofonen und Lautsprechern auszustatten. Auch hierbei sollte sichergestellt werden, dass der einzelnen Insasse unabhängig von der physikalischen Gestaltung des Insassenkommunikationssystems zu jeder Zeit und in jeder Position komfortabel kommunizieren kann.
Die japanische Schrift JP 2002-091469 zeigt ein Spracherkennungssystem, welches zur Aufnahme von Sprachsignalen über ein durch eine Einheit zur Strahlformung (Beamforming Unit) schaltbares, richtungsselektives Mikrofonarray verfügt. Die Einheit zur Strahlformung umfasst hierbei einen Richtungserkenner, welcher aus den aufgenommenen Sprachsignalen die auf die Sprechrichtung bezogene Winkelablagen erkennt. Hierzu werden aus unterschiedlichen Winkelablagen hinsichtlich der Empfangscharakteristik des Mikrofonarrays Signale empfangen und einer Schwellwertuntersuchung zugeführt. Im Rahmen dieser Schwellwertuntersuchung liefert der Richtungserkenner als Erkennungsergebnis die wahrscheinlichste Richtung, aus welcher das Sprachsignal herrührt. Dieses Ergebnis wird sodann von der Einheit zur Strahlformung zur Steuerung des Mikrofonarrays herangezogen, so dass das Empfangsdiagramm des Mikrofonarrays möglichst auf die Richtung hin ausgerichtet wird, aus welcher das wahrscheinlich beste Sprachsignal herrührt.
Aus der Offenlegungsschrift EP 1 081 682 A2 ist ein Spracherkennungssystem für eine Insassenkommunikationsanlage bekannt, welche eine Vielzahl unterschiedlich positionierter Mikrofonsysteme umfasst. Die Signale der einzelnen Mikrofonsysteme werden parallel erfasst und hinsichtlich der Parameter Signal-Rausch-Verhältnis und des im Signal enthaltenen mittleren Sprachpegels untersucht. Diejenigen Signale, deren Parameter bestimmte Schwellwerte überschreiten, werden einem Spracherkenner zugeführt, welcher sequentiell die einzelnen Signale bearbeitet, wobei mit dem stärksten Signal begonnen wird. Aus den aus den Einzelsignalen resultierenden positiven Erkennungsergebnissen wird der Sprachinhalt der Signale ermittelt. Durch die parallele Untersuchung der an unterschiedlichen Stellen aufgenommenen Mikrofonsignale ist ein Sprecher nicht mehr daran gebunden, die Sprachinformation in eine bestimmte Richtung hin zu sprechen; auch wird es möglich, dass er während des Sprechvorgangs die Sprechrichtung ändert, ohne dass Information verloren geht.
Eine weitere Spracherkennungseinrichtung zur parallelen Verarbeitung mehrerer paralleler Mikrofonkanäle wird in der deutschen Offenlegungsschrift DE 100 30 105 A1 beschrieben. Hierbei werden die einzelnen Mikrofonkanäle unabhängig voneinander einer Merkmalsextraktion unterzogen und erst im Rahmen einer gemeinsamen Klassifikation zusammengeführt. Auf diese Weise ist in der der Klassifikation zugeführten Information noch die den einzelnen Kanälen individuell zuordenbare Information enthalten. Auch wird es möglich die Vorverarbeitung in den einzelnen Kanälen individuell zu gestalten und die daraus resultierenden Auswirkungen auf die Signale unabhängig zu beobachten.

Das Dokument "Speech recognizer-based microphone array processing for robust hands-free speech recognition", Seltzer et al., Proceedings of ICASSP2002, 13.5.2002, XP002310104 beschreibt ein Beispiel von Rückkopplung der Spracherkennungsergebnisse für die Steuerung der Mikrofonanordnung.

Aufgabe der Erfindung ist es ein Spracherkennungssystem zu schaffen, welches zum einen eine verbesserte Spracherfassung aufweist und zum anderen eine optimierte Steuerung der Spracherfassung ermöglicht.
Die Aufgabe wird durch ein Verfahren und eine zur Durchführung des Verfahrens geeignete Vorrichtung mit den Merkmalen der Patentansprüche 1 und 6 gelöst. Vorteilhafte Ausgestaltungen und Weiterbildungen der Erfindung sind in den Unteransprüchen beschrieben.

Zur Regelung des Spracherkennungssystems wird eine Mikrofonanordnung (12) durch eine Optimierungseinheit (10) in ihrer Empfangscharakteristik modifiziert, wobei mittels der Mikrofonanordnung (12) Sprachsignale empfangen werden. Diese Sprachsignale werden sodann in einem Spracherkenner (11) zumindest zeitweise parallel verarbeitet. Auf Grundlage der von dem Spracherkenner (11) gelieferten Ergebnisse wird sodann über die Optimierungseinheit (10) die Empfangscharakteristik der Mikrofonanordnung (12) so gesteuert, dass die Erkennungsleistung des der Optimierungseinheit (10) nachgeordneten Spracherkenners (11) optimiert wird. In erfinderischer Weise werden hierbei dem Spracherkenner die empfangenen Sprachsignale parallel oder zumindest quasi-parallel zugeführt über die Sprachkanäle (14), so dass dieser unterschiedliche Sprachsignale zumindest Zeitweise parallel verarbeiten kann. Die Erkennungsergebnisse werden sodann hinsichtlich ihrer Qualität miteinander verglichen, wobei auf Grundlage dieses Vergleichs diejenigen Sprachsignale auswählt und weiterverar-beitet werden, welche das Potential für eine bestmögliche Erkennungsleistung haben. Desweiteren erhält auf Grundlage der Erkennungsergebnisse die Optimierungseinheit (10) durch den Spracherkenner die notwendigen Regelsignale (18), um die Empfangscharakteristik der Mikrofonanordnung (12) mittels einer Optimierungseinheit (10) in Bezug auf diejenigen Sprachkanäle (14) zu optimieren, welche die Sprachsignale führen, welche das Potential für eine bestmögliche Erkennungsleistung haben. Im Sinne dieser Erfindung ist selbstverständlich eine quasi-parallele Signalverarbeitung oder Signalweiterleitung mit einer parallelen Signalverarbeitung oder Signalweiterleitung gleichzusetzen. Bei einer quasi-parallelen Signalverarbeitung oder Signalweiterleitung erfolgt die Verarbeitung oder Weiterleitung zwar teilweise sequentiell (auf Grund der Prozessordimensionierung oder mangelnder Kapazität der Übertragungskanäle (14)), die Verarbeitungsergebnisse werden aber so behandelt, als ob der Verarbeitungs- oder Weiterleitungsvorgang tatsächlich parallel bzw. gleichzeitig verlaufen wäre. In besonders vorteilhafte Weise erlaubt die Erfindung eine intelligente Optimierung der Empfangscharakteristik des Mikrofonarrays (12), da die Regelung auf den Erkennungsergebnissen eines Spracherkenners (11) basiert und nicht nur auf Grundlage rein abstrakter, physikalischer Signalparameter (Stärke des Signalpegels oder Verhältnisse der Signale an den Ausgängen der Einzelmikrofone des Mikrofonarrays).
Als Mikrofonanordnung eignet sich in besonderer Weise eine Mikrofonarray, also eine Zusammenschaltung einer Anordnung von mehreren Einzelmikrofonen. Hierbei können die Einzelmikrofone zu einer oder mehreren Gruppen zusammengeführt werden, wodurch sich unterschiedliche Richtungsselektivitäten in der Empfangscharakteristik der einzelnen Mikrofonarrays erzielen läst. Am Ausgang der Mikrofonanordnung (12) können sodann parallel oder quasi-parallel Sprachsignale aus -unterschiedlichen Raumrichtungen abgegriffen und einer Weiterverarbeitung in einem Spracherkenner (11) zugeführt werden.

Es ist denkbar die Empfangscharakteristik des Mikrofonarrays (12) auf unterschiedliche Weise zu modifizieren und in Bezug auf unterschiedliche Empfangsrichtungen hin zu optimieren:
- Einerseits ist es hierbei denkbar die Richtungsselektivität (Richtwirkung) der Empfangscharakteristik des Mikrofonarrays (12) aktiv zu steuern.
- Andererseits kann die Empfangscharakteristik auch dahingehend optimiert werden, dass mehreren der Einzelmikrofone des Mikrofonarrays Einheiten zur Geräuschreduktion nachgeschaltet werden.

Diese beiden vorteilhaften Optimierungsverfahren und Ausgestaltungsmöglichkeiten können einzeln oder auch in Kombination realisiert werden. So wird in besonders vorteilhafter Weise das Spracherkennungssystem so ausgestaltet, dass mehreren der Einzelmikrofone des Mikrofonarrays (12) Einheiten zur Geräuschreduktion zugeordnet werden, und die Optimierungseinheit (10) ausgehend von den Regelsignalen (18) des Spracherkenners (11) sowohl die Richtungsselektivität als auch die Geräuschreduktion steuert und modifiziert.
So aber gleichwohl auch denkbar, das die Mikrofonanordnung (12) als Mikrofonarray so auszugestalten, dass dessen Empfangscharakteristik eine oder mehrere spezifische Richtungsselektivitäten aufweist, welche unveränderlich, fest vorgegeben sind, sodass die Optimierungseinheit (10) nur mehrere der den Einzelmikrofonen nachgeschalteten Einheiten zur Geräuschreduktion ansteuert und so die Empfangscharakteristik des Mikrofonarrays (12) modifiziert. Auf diese Weise lassen sich Schaltungsaufwand und Kosten in Bezug auf das Mikrofonarray (12) minimieren. In gleicher Weise ist es selbstverständlich auch denkbar auf die mehreren der Einzelmikrofone nachgeschalteten Einheiten zur Geräuschreduktion zu verzichten.
Eine andere vorteilhafte Ausgestaltung der Mikrofonanordnung (12), welche sich insbesondere dann eignet wenn aus physikalischen oder designtechnischen Gründen nur ein geringer Einbauplatz vorhanden ist, besteht darin, dass nur ein einzelnen Mikrofon benutzt wird. Hierbei wird dessen Ausgangssignal auf mehrere parallele oder quasi-parallele Sprachkanäle aufgetrennt, welchen für diese Sprachkanäle spezifische Signalaufbereitungseinheiten (insbesondere Einheiten zur Geräuschreduktion) zugeordnet sind. Auf die Funktionsparameter dieser Signalaufbereitungseinheiten wird durch die Optimierungseinheit (10) sodann im Rahmen der Spracherkennung einfluss genommen, so dass diejenige sprachkanal-spezifische Signalaufbereitung optimiert wird, welche die besten Erkennungsergebnisse im Spracherkenner (11) liefert.
Die Erfindung lässt sich somit in besonders vorteilhafter Weise mit den unterschiedlichsten Arten von Mikrofonanordnungen koppeln, hierdurch in ihrer Funktionalität beeinflusst zu werden. Hierdurch lässt sich die Erfindung auch auf die unterschiedlichsten Einsatzorte (Kraftfahrzeug (->geringes Platzangebot), Konferenzraum (-> großzügiges Platzangebot)) und Einsatzbedingungen (eine Sprecherposition mit unterschiedlichen Sprechern oder aber mehrere gleichzeitige Sprecherpositionen mit starken Umgebungsgeräuschen) anpassen.

Nachfolgend wird anhand von Ausführungsbeispielen und mit Hilfe von Figuren die Erfindung im Detail erläutert. Dabei zeigen:
- Fig. 1: zeigt den Aufbau einer vorteilhaften Ausführung des mehrstufigen, rückgekoppelten Sprachenerkennungssystems.
- Fig. 2: zeigt die Variabilität der durch die Einheit zur Strahlformung gesteuerten Empfangscharakterisiken des Mikrofonarrays auf.
- Fig. 3: zeigt beispielhaft eine mögliche statistische Auswertung der Signale des Mikrofonarrays zur Erkennung und Lokalisation mehrerer Sprecher.

Mittels der Figuren werden insbesondere Ausführungsbeispiele beschrieben, bei welchen die Richtungsselektivität (Richtwirkung) der Empfangscharakteristik der Mikrofonanordnung (12) durch die Optimierungseinheit (10) beeinflusst wird. Es ist für den Fachmann jedoch naheliegend diese Ausführungsbeispiele auch auf Anwendungsfälle zu übertragen, bei welchem die Empfangscharakteristik der Mikrofonanordnung (12) zusätzlich oder nur mittels der Steuerung von Einheiten zur Geräuschreduktion, welche mehreren der Einzelmikrofonen nachgeschalteten sind, modifiziert wird. Entsprechendes gilt für den Fall, bei welchem die Mikrofonanordnung (12) nur ein einziges Mikrofon gebildet wird, dessen Ausgangssignal auf mehrere parallele oder quasi-parallele Kanäle mit kanal-spezifischer Signalaufbereitung (insbesondere Geräuschreduktion) aufgespaltet wird.

In besonders vorteilhafter Weise lässt sich das erfindungsgemäße Spracherkennungssystem ausgestalten, indem der Spracherkenner (11) dergestalt ausgebildet wird, dass die Spracherkennung im Rahmen eines mehrstufigen Prozesses erfolgt. Dabei erfolgt durch eine oder mehrere dieser Verarbeitungsstufen zum einen eine Auswahl von Sprachsignalen, welche das Potential für eine bestmögliche Erkennungsleistung haben und einer Weiterverarbeitung zugeführt werden sollen. Zum anderen stellen diese einzelnen Verarbeitungsstufen einzeln oder gemeinsam der Optimierungseinheit (10) die notwendigen Regelsignale (18) zur Verfügung, um die Empfangscharakteristik des Mikrofonarrays (12) zu optimieren. Bei dem dargestellten Fall, dass die Mikrofonanordnung (12) aus einem richtungsselektiven Mikrofonarray besteht, wird durch die Optimierungseinheit (10) insbesondere die Richtungsselektivität der Empfangscharakteristik der Mikrofonanordnung (12) in Bezug auf diejenigen Richtungen hin zu optimieren, aus welchen diejenigen Sprachsignale empfangen werden, welche das Potential für eine bestmögliche Erkennungsleistung haben.

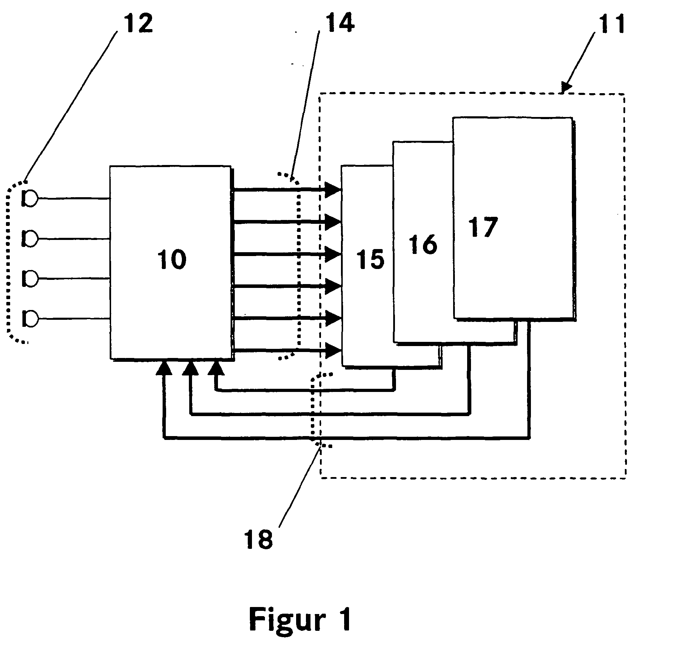

Wie in Figur 1 aufgezeigt, wird in gewinnbringender Weise der Spracherkenner aus zumindest drei aufeinander folgenden Verarbeitungseinheiten gebildet, welche zumindest
- einen Klassifikator (15), zur Erkennung von Lauteinheiten und/oder Lautuntereinheiten von Lauteinheiten,
- eine Einheit zur Worterkennung (16), zur Erkennung gesprochener Worte,
- und ein Einheit zur Erkennung und Interpretation sinnvoller Sätze (17) umfasst.

Hierbei sind die einzelnen Verarbeitungseinheiten (15, 16, 17) des Spracherkenners (11) so miteinander verbunden, dass mehrere der zuvor parallel verarbeiteten Signale parallel oder quasi-parallel an die nachfolgende Verarbeitungsstufe wertergereicht werden können. So wird nicht nur das als ,bestes' Signal identifizierte Sprachsignal weiterverarbeitet, sondern es ist möglich auch weitere ,gute' Sprachsignale weiter zu berücksichtigen. Eine derartige Ausgestaltung ist insbesondere deshalb besonders vorteilhaft, da es sich in der Praxis manchmal zeigt, dass bestimmte Signale in einer der Verarbeitungsstufen zwar exzellente Ergebnisse liefern, in der darauffolgenden Verarbeitungsstufe aber nicht zu gebrauchen sind; hier liefern dann oft diejenigen Sprachsignale, welche in der vorausgehenden Verarbeitungsstufe mit nicht so gutem Ergebnis abgeschnitten haben im gesamten ein besseres Ergebnis. Wird beispielsweise das gesprochene Wort "ich" durch störende Umfeldgeräusche zu einem scheinbaren "mich", so würde dieser Fehler von der Einheit zur Sprachinterpretation (17) meist noch richtig auf "ich" umgedeutet, wenn dieser durch den Worterkenner parallel sowohl die Worte "mich" als auch "ich" zugeführt würden. Würde der Worterkenner (16) aber nur das Wort, welches er mit der höchsten Wahrscheinlichkeit erkennt weiter geleitet, so hätte die Einheit zur Sprachinterpretation (17) keine Möglichkeit zu Erkennen, dass in diesem Zusammenhang das Wort "ich" richtig ist.
Dem Spracherkenner (11) werden durch die Optimierungseinheit (10) mehrere Mikrofonsignale über Zuleitungen (15) parallel oder quasi parallel zugeführt. Hierbei kann es sich um Signale unterschiedlichster Art handeln. In einfachster Form entsprechen die parallel geführten Signale den Einzelsignalen der einzelnen die Mikrofonanordnung (10) bildenden Einzelmikrofone. Sehr wohl ist es aber auch denkbar, über die einzelnen parallel geführten Signalkanäle bereits durch die Optimierungseinheit (10) vorverarbeitete Mikrofonsignale zu führen. So ist es möglich, dass die Signalkanäle Signale aus unterschiedlichen Raumrichtungen (21) führen, welche durch adaptives Beamforming und zusammenführen der Signale mehrerer Einzelmikrofone (12) generiert wurden. Sehr wohl kann es sich aber auch um die Sprachsignale aus einer einzelnen Raumrichtung (21₍₁₋ₖ₎) handeln, welche mit unterschiedlich gestalteten Empfangscharakteristiken des Mikrofonarrays (beispielsweise: breite/schmale Empfangskeule, unterschiedlichste Empfangsparameter und -empfindlichkeiten oder unterschiedlichen Methoden bzw. Parameter bei der Geräuschreduktion)empfangen wurden. Mittels der Rückkopplung der Steuersignale vom Spracherkenner zum Optimierungseinheit (10) kann die Empfangscharakteristik des Mikrofonarrays also auch hinsichtlich der Anzahl und Art von Charakteristiken und auf Grundlage unterschiedlichster optimierter Geräuschreduktions-Parameter gesteuert werden.

Die Optimierungseinheit (10) erhält ihre Steuersignale über eine oder mehrere Steuerleitungen (18) vom Spracherkenner (11) beziehungsweise von einer seiner Untereinheiten (15, 16, 17). Der Klassifikator (15) kann beispielsweise bewirken, dass der Empfang von denjenigen Raumrichtungen unterdrückt wird, welche nur akustische Signale liefern, welche gar keine Sprachsignale sind. Durch die Steuersignale der Einheit zur Worterkennung (16) kann die Empfangscharakteristik weiter optimiert werden, um ein geeignetes Empfangssignal zu generieren, aus welchem Wörter optimal extrahiert werden können. In Bezug auf den oben angeführten Beispielsfall, bei welchem das Wort "ich" durch Störsignale, zumindest bei bestimmten Empfangscharakterisiken als Wort "mich" vom Mikrofonarray empfangen wurde, kann durch gezielte Steuerung durch die Einheit zur Sprachinterpretation die Empfangscharakteristik des Mikrofonarrays ergänzend dergestalt optimiert werden, dass die in diesem Falle verfälschenden Störgeräusche bestmöglich weiter unterdrückt werden.

Dieses besonders vorteilhafte Konzept der mehrstufigen, parallelisierten Steuerung der Empfangscharakteristik der Mikrofonanordnung (12) erlaubt eine bestmögliche Elimination von Störeinflüssen und resultiert in einer optimalen Spracherkennung.

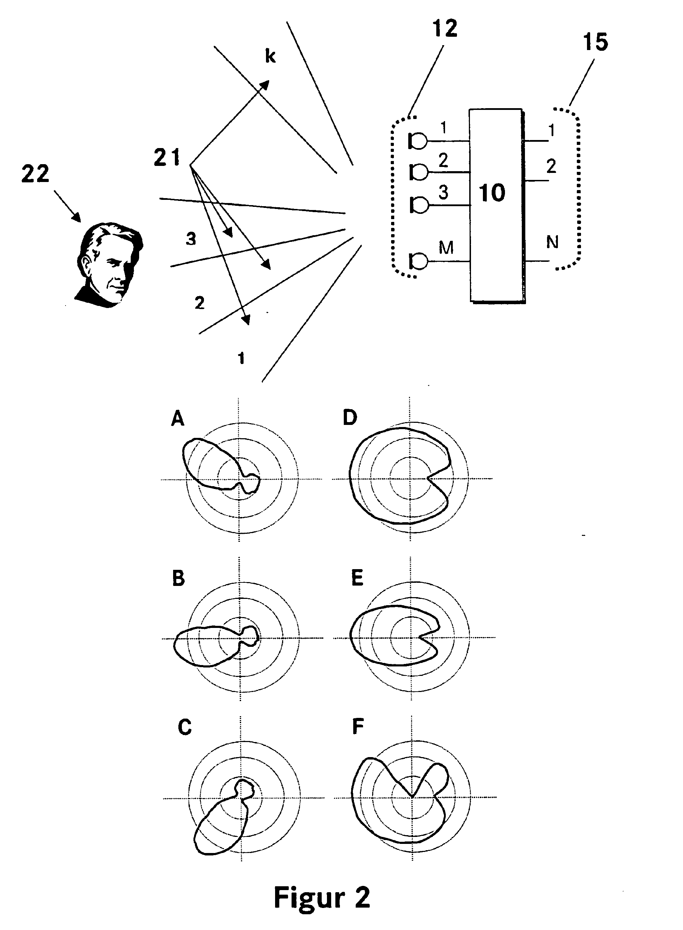

Beispielhaft zeigt Figur 2 die Variabilität der durch die Optimierungseinheit (10) gesteuerten Empfangscharakterisiken des Mikrofonarrays aus M Einzelmikrofonen (12) auf. Hierbei weist die Optimierungseinheit (10) N parallele Ausgänge (15) zur Übermittlung der Mikrofonsignale an den Spracherkenner (11) auf. Wie zuvor bereits ausgeführt muss die Anzahl N der Ausgänge (15) der Optimierungseinheit (10) nicht mit der Anzahl M der Einzelmikrofone (12) an seinem Eingang übereinstimmen, da die parallelen Ausgangssignale im allgemeinen nicht einfache Kopien der Ausgangssignale der Einzelmikrofone des Mikrofonarrays entsprechen, sondern meist aus teilweise komplexen Fusionen dieser Signale herrühren. Im der unteren Hälfte der Figur 2 sind beispielhaft sechs mögliche Empfangscharakteristika des Mikrofonarrays aufgezeigt. So ist es beispielsweise denkbar, Empfangscharakteristiken zu bilden, welche selektiv bezüglich unterschiedlicher Raumrichtungen sind (A, B, C) oder welche unterschiedliche Richtungsselektivität aufweisen (D, E) oder welche mit einer Nullstelle (zum Beispiel in Richtung einer dominanten Störquelle, wie einem geöffneten Fenster)versehen sind (F).

Bei dem in Figur 2 aufgezeigten Beispiel finden sich ein Sprecher (22) in etwa zwischen den virtuellen Raumsektoren 2 und 3, so dass mit den im unteren Teil der Figur 2 mit B, D, E und F bezeichneten, durch die Optimierungseinheit(10) gebildeten Empfangscharakterisiken die beste Erkennungsleitung zu erwarten ist. Aus dieser Figur 2 wird jedoch zugleich auch klar, dass es im Vorfeld einer eigentlichen Spracherkennung schwierig ist sich auf eine dieser vier Empfangscharakteristiken B, D, E und F festzulegen, so dass sicher besser ist, alle aus den vier Empfangscharakteristiken resultierenden Signale parallel im Spracherkenner (11) zu verarbeiten und erst im Nachhinein eine Auswahl oder gar Optimierung der Empfangscharakteristik vorzunehmen.

Die Adaption der Empfangscharakteristik (Beamforming)der Mikrofonanordnung (12) kann mittels bekannter Verfahren beispielsweise mittels der Methode nach Griffith-Jim oder dem Frost-Beamforming erfolgen.

Es ist zudem oft üblich einer Einheit zur Adaption der Empfangscharakteristik eines Mikrofons (Mikrofon-Beamformer) ein einkanaliges Geräuschreduktionsverfahren, wie zum Beispiel, das bekannte Verfahren der Spektralen Subtraktion (im Spektralbereich des Mikrofonsignals wird ein Geräusch-Schätzwert subtrahiert), nachzuschalten. Einfache Geräuschreduktionsverfahren benutzen beispielsweise nur die Spektrale Subtraktion. Im vorliegenden Fall kann das einkanalige Verfahren zur Nachverarbeitung der einzelnen Ausgänge der Einheit zur Adaption der Empfangscharakteristik verwendet werden. Die Spektrale Subtraktion bringt ihrerseits Parameter mit, wie unter anderem ein Faktor mit der Geräusch-Schätzwerte vor der Subtraktion gewichtet wird, oder eine untere Schwelle im Spektrum die nach der Subtraktion nicht unerschritten werden darf (der sogenannte Spectral Floor). Der Geräusch-Gewichtungsfaktor und die untere Schwelle des Spektrums sind Parameter. Aus jedem der Ausgänge des Mikrofon-Beamformers können nun wiederum mehrere Ausgänge erzeugt werden, wenn das Ausgangssignal des Beamformers mehrere Parameter-Varianten einer Spektralen Subtraktion durchläuft.

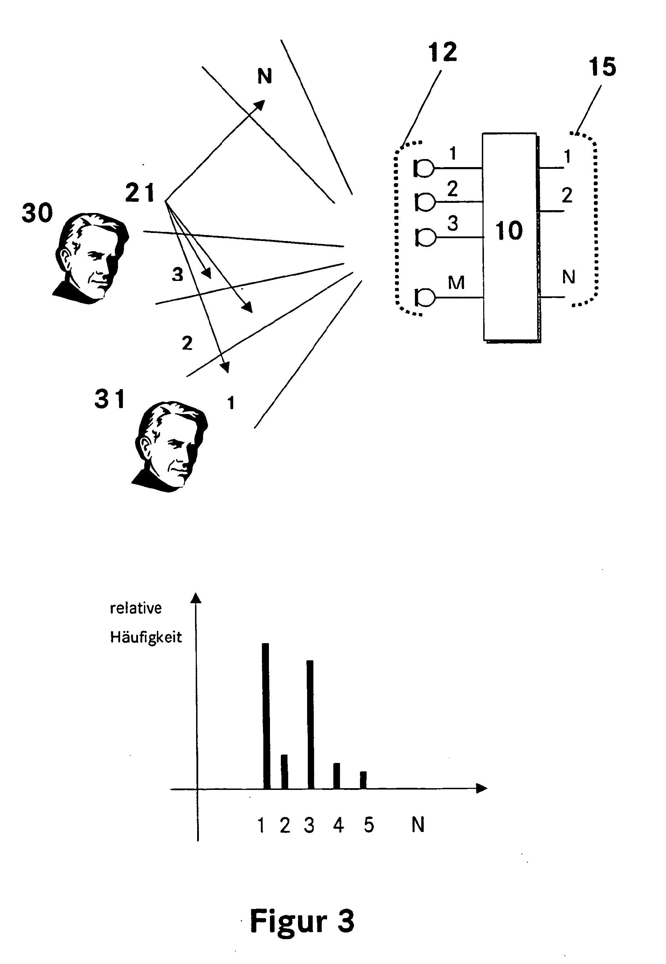

In besonders vorteilhafter Weise lässt sich das erfindungsgemäße Spracherkennungssystem dahingehend modifizieren, dass es in die Lage versetzt wird, in der Mikrofonanordnung (12) empfangenen Signalen mehrere Sprecher (30, 31) zu erkennen. Werden mehrere Sprecher (30, 31) erkannt, so können sodann die über die Optimierungseinheit (10) unterschiedlich wählbaren Empfangscharakteristiken auf die Sprechrichtung der unterschiedlichen Sprecher hin optimiert werden. Figur 3 dient der Erläuterung eines besonders vorteilhaften Verfahrens zur Erkennung mehrer Sprecher (30, 31) in dem von der Mikrofonanordnung (12) aufgenommenen Signal. Hierbei wird über einen bestimmten Zeitraum eine Statistik darüber geführt, wie oft jeder einzelne der N-Ausgänge der Optimierungseinheit (10) durch den Spracherkenner (11) als derjenige der N Sprachsignalkanäle (15) identifiziert wird, welcher das ,beste' Signal liefert. Aus der Kenntnis der den einzelnen Sprachsignalkanälen (15) zuzuordnenden Empfangscharakteristik der Optimierungseinheit (10) kann sodann die Anzahl der Sprecher (30, 31) geschätzt werden. Bei dem in Figur 3 aufgezeigten Beispiel befindet sich einer der Sprecher (30) in Raumsektor 3 und einer Sprecher (31) in Raumsektor 1. Das System verfügt über N Sprachsignalkanäle (15) denen jeweils eine auf einen von N nebeneinanderliegenden Raumsektoren (21) spezifizierte Empfangscharakteristiken zugeordnet ist. Wird nun über einen gewissen Zeitraum, während dessen die Sprecher 30 und 31 reden, eine Statistik über die Qualität der Sprachsignale in den einzelnen Kanälen geführt, so ergibt sich in etwa die in Figur 3 aufgezeigte Statistik. In besonders vorteilhafte Weise wurde die hier dargestellte statistische Auswertung anhand eines Histogramms erstellt, wobei andere statistische Auswerteverfahren gleichsam ebenfalls zur Anwendung kommen können. Bei einer statistischen Auswertung auf Basis eines Histogramms werden im Hinblick auf das in Figur 3 dargestellte Beispiel entlang der Ordinate des Diagramms unterschiedliche räumlich nebeneinander liegende Empfangscharakteristiken (Raumrichtungen) aufgelistet. Dabei wird abgebildet, wie häufig ein aus deiner dieser bestimmten Raumrichtungen (21) empfangenes Signal zu einem brauchbaren Erkennungsergebnis beigetragen hat. Auf diese Weise kann sodann auf unterschiedliche Sprecher (30, 31) geschlossen werden, wenn zwischen zwei im Histogramm in ihrer Häufigkeit deutlich hervortretenden Raumrichtungen wenigstens eine Raumrichtung gegeben ist, welche eine hierzu signifikant geringe Häufigkeit aufweist. Selbstverständlich kann durch den Fachmann dieses Verfahren vergleichbar auf eine Optimierungseinheit mit unterschiedlichsten Richtungsselektivitäten in der Empfangscharakteristik adaptiert werden.

Eine weitere gewinnbringende Verbesserung des erfindungsgemäßen Spracherkennungssystems lässt sich dadurch erzielen, dass für den Fall, dass auf das Vorhandensein mehrere Sprecher geschlossen wird, dem Spracherkennungssystem wenigstens ein weiterer Spracherkenner zugeschaltet wird. Die Zuschaltung erfolgt idealer Weise direkt hinter der Optimierungseinheit (10), so dass gewissermaßen eine Parallelschaltung der Spracherkenner entsteht. Auf diese Weise lässt sich die Verarbeitungsleistung weiter steigern und optimieren, insbesondere indem jedem einzelnen der Spracherkenner spezifisch diejenigen Sprachsignale zugeleitet werden, welche aus denjenigen Raumrichtungen stammen, welche den einzelnen der mehreren Sprecher zugeordnet sind.

## Patentansprüche

1. Verfahren zur Regelung eines Spracherkennungssystems,
bei welchem eine Mikrofonanordnung durch eine optimierungseinheit (10) in ihrer Empfangscharakteristik gesteuert wird,
wobei mittels der Mikrofonanordnung Sprachsignale empfangen und verarbeitet werden,
und bei dem in Folge der Verarbeitung der Sprachsignale über die Optimierungseinheit (10) die Empfangscharakteristik der Mikrofonanordnung (12) so gesteuert wird, dass die Erkennungsleistung des der Optimierungseinheit(10) nachgeordneten Spracherkenners (11) optimiert wird,
**dadurch gekennzeichnet ,**
**dass** dem Spracherkenner (11) empfangene Sprachsignale über mehrere parallele oder quasi-parallele Sprachkanäle (15) zugeführt werden,
**dass** der Spracherkenner (11) diese Sprachkanäle zumindest zeitweise parallel verarbeitet und die Erkennungsergebnisse hinsichtlich ihrer Qualität miteinander vergleicht,
und **dass** auf Grundlage dieses Vergleichs
zum einen die Sprachsignale derjenigen Sprachkanäle (14) ausgewählt und weiterverarbeitet werden, welche das Potential für eine bestmögliche Erkennungsleistung haben,
und zum anderen die Optimierungseinheit (10) durch den Spracherkenner die notwendigen Regelsignale (18) erhält, um die Empfangscharakteristik des Mikrofonarrays (12) in bezug auf diejenigen Sprachkanäle (14) zu optimieren, über welche diejenigen Sprachsignale empfangen werden, welche das Potential für eine bestmögliche Erkennungsleistung haben.

2. Verfahren zur Regelung eines Spracherkennungssystems nach Anspruch 1,
**dadurch gekennzeichnet ,**
**dass** die Spracherkennung im Spracherkenner (11) im Rahmen eines mehrstufigen Prozesses erfolgt, welcher zumindest nacheinander folgend die Verarbeitungsstufen
- Klassifikation (15), zur Erkennung von Lauteinheiten und/oder Lautuntereinheiten von Lauteinheiten,
- Worterkennung (16), zur Erkennung gesprochener Worte,
- und Interpretation, zur Erkennung und Interpretation sinnvoller Sätze (17) umfasst,
und **dass** durch eine oder mehrere dieser Verarbeitungsstufen
zum einen eine Auswahl von Sprachsignalen getroffen wird, welche das Potential für eine bestmögliche Erkennungsleistung haben, und welche einer Weiterverarbeitung zugeführt werden sollen,
und zum anderen der Optimierungseinheit (10) notwendige Regelsignale (18) zur Verfügung gestellt werden, um die Empfangscharakteristik des Mikrofonarrays (12) in Bezug auf diejenigen Sprachkanäle (14) zu optimieren, aus welchen diejenigen Sprachsignale empfangen werden, welche das Potential für eine bestmögliche Erkennungsleistung haben.

3. Verfahren zur Regelung eines Spracherkennungssystems nach einem der vorhergehenden Ansprüche,
**dadurch gekennzeichnet ,**
**dass** eine Statistik darüber geführt wird, für welche Empfangscharakteristiken des Mikrofonarrays optimale Erkennungsleistungen erzielt wurden,
und das ausgehend von dieser Statistik entschieden wird, ob die von dem Spracherkennungssystem verarbeiteten Sprachsignale von unterschiedlichen Sprechern stammen.

4. Verfahren zur Regelung eines Spracherkennungssystems nach Anspruch 3,
**dadurch gekennzeichnet ,**
**dass** die Statistik in Art eines Histogramms geführt wird, welches entlang seiner Ordinate unterschiedliche räumlich nebeneinander liegende Raumrichtungen auflistet, und abbildet, wie häufig ein aus einer dieser bestimmten Raumrichtungen empfangenes Signal zu einem brauchbaren Erkennungsergebnis beigetragen hat,
wobei dann auf unterschiedliche Sprecher entschieden wird, wenn zwischen zwei im Histogramm in ihrer Häufigkeit deutlich hervortretenden Raumrichtungen wenigstens eine Raumrichtung gegeben ist, welche eine hierzu signifikant geringe Häufigkeit aufweist.

5. Verfahren zur Regelung eines Spracherkennungssystem nach einem der Ansprüche 1 oder 4,
**dadurch gekennzeichnet ,**
**dass** für den Fall, dass auf das Vorhandensein mehrerer Sprecher (30, 31) geschlossen wird, dem Spracherkennungssystem wenigstens ein weiterer Spracherkenner zugeschaltet wird,
welcher im wesentlichen die selben Funktionalitäten wie der bereits im Spracherkennungssystem enthaltene Spracherkenner aufweist,
und welchem von der Optimierungseinheit (10) diejenigen Sprachsignale zugeleitet werden, welche aus den Raumrichtungen stammen, welche wenigstens einem der mehreren Sprecher zugeordnet sind.

6. Vorrichtung zur Regelung eines Spracherkennungssystems,
bestehend aus einer Mikrofonanordnung mit einer Optimierungseinheit (10) zur Modifikation der Empfangscharakteristik der Mikrofonanordnung (12),
welche über wenigstens einen Spracherkenner (11) verfügt, welchem die Sprachsignale zugeführt werden und welcher diese verarbeitet,
wobei der Spracherkenner (11) mit der Optimierungseinheit (10) zur Modifikation der Empfangscharakteristik der Mikrofonanordnung (12) in Verbindung steht, so dass über diese Verbindung die Empfangscharakteristik dergestalt geregelt werden kann, dass die Erkennungsleistung des der Optimierungseinheit (10) nachgeordneten Spracherkenners (11) optimiert wird,
**dadurch gekennzeichnet ,**
**dass** dem Spracherkenner (11) die Sprachsignale über mehrere parallele Signalleitungen (14) zugeführt werden, dass der Spracherkenner (11) mit der Optimierungseinheit (10) dergestalt in Verbindung steht, dass ihm die Sprachsignale über Sprachkanäle (14) parallel oder quasi-parallel zugeführt werden,
**dass** der Spracherkenner (11) so ausgestaltet ist, dass er diese unterschiedlichen Sprachsignale parallel oder quasi-parallel verarbeiten und die Erkennungsergebnisse hinsichtlich ihrer Qualität miteinander vergleichen kann,
und **dass** auf Grundlage dieses Vergleichs
zum einen die Sprachsignale derjenigen Sprachkanäle ausgewählt und weiterverarbeitet werden, welche das Potential für eine bestmögliche Erkennungsleistung haben,
und zum anderen die Optimierungseinheit (10) durch den Spracherkenner die notwendigen Regelsignale (18) erhält, um die Empfangscharakteristik des Mikrofonarrays in Bezug auf diejenigen Sprachkanäle (14) hin zu optimieren, welche die Sprachsignale leiten, welche das Potential für eine bestmögliche Erkennungsleistung haben.

7. Vorrichtung zur Regelung eines Spracherkennungssystems nach Anspruch 6,
**dadurch gekennzeichnet,**
**dass** der Spracherkenner mehrstufig ausgestaltet ist, und zumindest enthält:
- einen Klassifikator (15), zur Erkennung von Lauteinheiten und/oder Lautuntereinheiten von Lauteinheiten,
- eine Einheit zur Erkennung gesprochener Worte in den empfangen Sprachsignalen (16), zur Erkennung gesprochener Worte,
- und eine Einheit zur Interpretation des empfangenen Sprachsignals (17), zur Erkennung und Interpretation sinnvoller Sätze umfasst, und dass durch eine oder mehrere dieser Verarbeitungsstufen
zum einen eine Auswahl von Sprachsignalen getroffen wird, welche das Potential für eine bestmögliche Erkennungsleistung haben, und welche einer Weiterverarbeitung zugeführt werden sollen,
und zum anderen der Optimierungseinheit (10) notwendige Regelsignale (18) zur Verfügung gestellt werden, um die Empfangscharakteristik des Mikrofonarrays (12) in Bezug auf diejenigen Sprachkanäle (14) hin zu optimieren, welche diejenigen Sprachsignale führen, welche das Potential für eine bestmögliche Erkennungsleistung haben.

8. Vorrichtung zur Regelung eines Spracherkennungssystem nach einem der Ansprüche 6 bis 7,
**dadurch gekennzeichnet ,**
**dass** die Vorrichtung so ausgestaltet ist, dass für den Fall dass die empfangenen Sprachsignale mehreren Sprechern zuzuordnen sind wenigstens ein weiterer Spracherkenner zugeordnet werden kann, welcher im wesentlichen die selben Funktionalitäten wie der bereits im Spracherkennungssystem enthaltene Spracherkenner (11) aufweist,
und welcher mit der Optimierungseinheit (10) dergestalt in Verbindung steht, dass ihm diejenigen Sprachsignale zugeleitet werden, welche aus den Raumrichtungen stammen, welche wenigstens einem der mehreren Sprecher zugeordnet sind.

## Claims

1. Method for controlling a speech recognition system, in which the reception characteristic of a microphone array is controlled by an optimization unit (10) ,
speech signals being received and processed by means of the microphone array,
and in which the reception characteristic of the microphone array (12) is controlled by means of the optimization unit (10) as a result of the processing of the speech signals in such a way that the recognition performance of the speech recognizer (11) which is arranged downstream of the optimization unit (10) is optimized,
**characterized**
**in that** received speech signals are fed to the speech recognizer (11) via a plurality of parallel or quasi-parallel speech channels (14),
**in that** the speech recognizer (11) processes these speech channels in parallel at least for a certain time and compares the recognition results with one another in terms of their quality,
and **in that**, on the basis of this comparison,
on the one hand the speech signals of those speech channels (14) which have the potential for the best possible recognition performance are selected and further processed,
and on the other hand the optimization unit (10) receives, by means of the speech recognizer, the necessary control signals (18) to optimize the reception characteristic of the microphone array (12) with respect to those speech channels (14) via which those speech signals which have the potential for the best possible recognition performance are received.

2. Method for controlling a speech recognition system according to Claim 1,
**characterized**
**in that** the speech recognition in the speech recognizer (11) takes place within the scope of a multi-stage process which comprises, at least following one another in succession, the processing stages of
- classification (15) for recognizing sound units and/or sound subunits of sound units,
- word recognition (16) for recognizing spoken words,
- and interpretation for recognizing and interpreting meaningful sentences (17),
and **in that**, by means of one or more of these processing stages,
on the one hand speech signals which have the potential for the best possible recognition performance and which are to be fed to a further processing means are selected,
and on the other hand necessary control signals (18) are made available to the optimization unit (10) in order to optimize the reception characteristic of the microphone array (12) with respect to those speech channels (14) from which those speech signals which have the potential for the best possible recognition performance are received.

3. Method for controlling a speech recognition system according to one of the preceding claims,
**characterized**
**in that** a statistic indicating the reception characteristics of the microphone array for which optimum recognition performances have been achieved is kept,
and **in that** on the basis of this statistic it is decided whether the speech signals which are processed by the speech recognition system originate from different speakers.

4. Method for controlling a speech recognition system according to Claim 3,
**characterized**
**in that** the statistic is kept in the form of a histogram which lists different spatial directions lying spatially one next to the other along its ordinate, and models how frequently a signal received from one of these specific spatial directions has contributed to a useable recognition result,
in which case it is decided that there are different speakers if, between two spatial directions which clearly occur in terms of their frequency in the histogram, there is at least one spatial direction which has a significantly low frequency with respect to the latter.

5. Method for controlling a speech recognition system according to one of Claims 1 or 4,
**characterized**
**in that** if it is concluded that a plurality of speakers (30, 31) are present, at least one further speech recognizer is connected to the speech recognition system
and said recognizer has essentially the same functionalities as the speech recognizer which is already contained in the speech recognition system, and those speech signals which originate from the spatial directions which are assigned at least to one of the plurality of speakers are fed to it by the optimization unit (10).

6. Device for controlling a speech recognition system, composed of a microphone array having an optimization unit (10) for modifying the reception characteristic of the microphone array (12),
which has at least one speech recognizer (11) to which the speech signals are fed and which processes said speech signals,
the speech recognizer (11) being connected to the optimization unit (10) for modifying the reception characteristic of the microphone array (12) so that the reception characteristic can be controlled by means of this connection in such a way that the recognition performance of the speech recognizer (11) which is arranged downstream of the optimization unit (10) is optimized,
**characterized**
**in that** the speech signals are fed to the speech recognizer (11) via a plurality of parallel signal lines (14),
**in that** the speech recognizer (11) is connected to the optimization unit (10) in such a way that the speech signals are fed to it in parallel or quasi-parallel via speech channels (14),
**in that** the speech recognizer (11) is configured in such a way that it can process these different speech signals in parallel or quasi-parallel and can compare the recognition results with one another in terms of their quality,
and **in that**, on the basis of this comparison,
on the one hand the speech signals of those speech channels which have the potential for the best possible recognition performance are selected and further processed,
and on the other hand the optimization unit (10) receives, by means of the speech recognizer, the necessary control signals (18) to optimize the reception characteristic of the microphone array with respect to those speech channels (14) which conduct the speech signals which have the potential for the best possible recognition performance.

7. Device for controlling a speech recognition system according to Claim 6,
**characterized**
**in that** the speech recognizer is of multi-stage configuration and contains at least:
- a classifier (15) for recognizing sound units and/or sound subunits of sound units,
- a unit for recognizing spoken words in the received speech signals (16), for recognizing spoken words,
- and comprises a unit for interpreting the received speech signal (17), for recognizing and interpreting meaningful sentences,
and **in that**, by means of one or more of these processing stages,
on the one hand speech signals which have the potential for the best possible recognition performance and which are to be fed to a further processing means are selected,
and on the other hand necessary control signals (18) are made available to the optimization unit (10) in order to optimize the reception characteristic of microphone array (12) with respect to those speech channels (14) which conduct those speech signals which have the potential for the best possible recognition performance.

8. Device for controlling a speech recognition system according to one of Claims 6 to 7,
**characterized**
**in that** the device is configured in such a way that if the received speech signals are to be assigned to a plurality of speakers, it is possible to assign at least one further speech recognizer which has essentially the same functionalities as the speech recognizer (11) which is already contained in the speech recognition system,
and which is connected to the optimization unit (10) in such a way that those speech signals which originate from the spatial directions which are assigned to at least one of the plurality of speakers are fed to it.

## Revendications

1. Procédé de régulation d'un système de reconnaissance de la parole,
dans lequel un ensemble de microphones est commandé au niveau de sa caractéristique de réception par une unité d'optimisation (10),
dans lequel, au moyen de l'ensemble de microphones, des signaux vocaux sont reçus et traités,
et dans lequel, suite au traitement des signaux vocaux, la caractéristique de réception de l'ensemble de microphones (12) est commandée par l'intermédiaire de l'unité d'optimisation (10) de telle sorte que la puissance de reconnaissance du dispositif de reconnaissance de la parole (11) placé en aval de l'unité d'optimisation (10) est optimisée,
**caractérisé en ce que**
des signaux vocaux reçus sont amenés au dispositif de reconnaissance de la parole (11) à travers plusieurs voies vocales (14) parallèles ou quasi-parallèles,
le dispositif de reconnaissance de la parole (11) traite ces voies vocales au moins temporairement en parallèle et compare les résultats de reconnaissance les uns aux autres en ce qui concerne leur qualité,
et **en ce que** sur la base de cette comparaison,
d'une part, on sélectionne et traite les signaux vocaux de celles des voies vocales (14), qui présentent le potentiel de la meilleure puissance de reconnaissance possible,
et d'autre part, l'unité d'optimisation (10) reçoit par le dispositif de reconnaissance de la parole les signaux de régulation nécessaires (18) pour optimiser la caractéristique de réception du réseau de microphones (12) par rapport à celles des voies vocales (14) par lesquelles ceux des signaux vocaux sont reçus qui ont le potentiel de la meilleure puissance de reconnaissance possible.

2. Procédé de régulation d'un système de reconnaissance de la parole selon la revendication 1,
**caractérisé en ce que**
la reconnaissance de la parole s'effectue dans le dispositif de reconnaissance de la parole (11) dans le cadre d'un processus à plusieurs étapes qui comprend au moins consécutivement les étapes de traitement suivantes
- une classification (15) pour reconnaître des phonèmes et/ou des sous-phonèmes de phonèmes,
- une reconnaissance de mots (16) pour reconnaître des mots prononcés,
- et une interprétation pour reconnaître et interpréter des phrases significatives (17),
et **en ce que** par une ou plusieurs de ces étapes de traitement
d'une part, une sélection est réalisée des signaux vocaux qui ont le potentiel pour la meilleure puissance de reconnaissance possible et qui doivent être amenés à un traitement ultérieur,
et d'autre part, des signaux de régulation (18) sont mis à la disposition de l'unité d'optimisation (10) pour optimiser la caractéristique de réception du réseau de microphones (12) par rapport à celles des voies vocales (14) à partir desquelles ceux des signaux vocaux sont reçus qui présentent le potentiel pour la meilleure puissance de reconnaissance possible.

3. Procédé de régulation d'un système de reconnaissance de la parole selon l'une quelconque des revendications précédentes,
**caractérisé en ce que**
des statistiques sont établies pour savoir pour quelles caractéristiques de réception du réseau de microphones des puissances de reconnaissance optimales ont été obtenues,
et en partant de ces statistiques, il est décidé si les signaux vocaux traités par le système de reconnaissance de la parole proviennent de différents locuteurs.

4. Procédé de régulation d'un système de reconnaissance de la parole selon la revendication 3,
**caractérisé en ce que**
les statistiques sont établies sous la forme d'un histogramme qui énumère le long de son ordonnée différentes directions spatiales adjacentes dans l'espace, et représente combien de fois un signal reçu à partir d'une de ces directions spatiales déterminées a contribué à un résultat de reconnaissance utilisable,
dans lequel il est décidé alors qu'il existe des locuteurs différents quand entre deux directions spatiales ressortant clairement par leur fréquence dans l'histogramme, il existe au moins une direction spatiale qui présente une fréquence réduite de façon significative par rapport à celle-ci.

5. Procédé de régulation d'un système de reconnaissance de la parole selon l'une quelconque des revendications 1 ou 4,
**caractérisé en ce que**
pour le cas où il est conclu qu'il existe plusieurs locuteurs (30, 31), au moins un autre dispositif de reconnaissance de la parole est mis en circuit avec le système de reconnaissance de la parole,
qui présente substantiellement les mêmes fonctionnalités que le dispositif de reconnaissance de la parole déjà compris dans le système de reconnaissance de la parole,
et auquel l'unité d'optimisation (10) amène ceux des signaux vocaux qui proviennent des directions spatiales qui sont affectées à au moins l'un des locuteurs multiples.

6. Dispositif de régulation d'un système de reconnaissance de la parole,
composé d'un ensemble de microphones avec une unité d'optimisation (10) pour la modification de la caractéristique de réception de l'ensemble de microphones (12),
qui dispose d'au moins un dispositif de reconnaissance de la parole (11) auquel les signaux vocaux sont amenés et qui les traite,
le dispositif de reconnaissance de la parole (11) étant en communication avec l'unité d'optimisation (10) pour la modification de la caractéristique de réception de l'ensemble de microphones (12), de sorte que la caractéristique de réception peut être régulée par l'intermédiaire de cette connexion de telle sorte que la puissance de reconnaissance du dispositif de reconnaissance de la parole (11) placé en aval de l'unité d'optimisation (10) est optimisée,
**caractérisé en ce que**
les signaux vocaux sont amenés au dispositif de reconnaissance de la parole (11) à travers plusieurs lignes de transfert de signaux parallèles (14),
le dispositif de reconnaissance de la parole (11) est en communication avec l'unité d'optimisation (10) de telle sorte que les signaux vocaux lui sont amenés à travers des voies vocales (14) de façon parallèle ou quasi-parallèle,
le dispositif de reconnaissance de la parole (11) est configuré de telle sorte qu'il peut traiter ces différents signaux vocaux de façon parallèle ou quasi-parallèle et comparer les résultats de reconnaissance les uns aux autres en ce qui concerne leur qualité,
et **en ce que** sur la base de cette comparaison,
d'une part, les signaux vocaux de celles des voies vocales sont sélectionnés et traités qui présentent le potentiel pour la meilleure puissance de reconnaissance possible,
et d'autre part, l'unité d'optimisation (10) reçoit par le dispositif de reconnaissance de la parole les signaux de régulation nécessaires (18) pour optimiser la caractéristique de réception du réseau de microphones par rapport à celles des voies vocales (14) qui conduisent les signaux vocaux qui présentent le potentiel pour la meilleure puissance de reconnaissance possible.

7. Dispositif de régulation d'un système de reconnaissance de la parole selon la revendication 6,
**caractérisé en ce que**
le dispositif de reconnaissance de la parole est configuré à plusieurs étages, et comprend au moins :
- un classificateur (15) pour reconnaître des phonèmes et/ou des sous-phonèmes de phonèmes,
- une unité de reconnaissance de mots prononcés dans les signaux vocaux reçus (16) pour reconnaître des mots prononcés,
- et une unité d'interprétation du signal vocal reçu (17) pour reconnaître et interpréter des phrases significatives,
et **en ce que** par une ou plusieurs de ces étages de traitement
d'une part, une sélection est réalisée des signaux vocaux qui ont le potentiel pour la meilleure puissance de reconnaissance possible et qui doivent être amenés à un traitement ultérieur,
et d'autre part, des signaux de régulation nécessaires (18) sont mis à la disposition de l'unité d'optimisation (10) pour optimiser la caractéristique de réception du réseau dé microphones (12) par rapport à celles des voies vocales (14) qui conduisent ceux des signaux vocaux qui présentent le potentiel pour la meilleure puissance de reconnaissance possible.

8. Dispositif de régulation d'un système de reconnaissance de la parole selon l'une quelconque des revendications 6 à 7,
**caractérisé en ce que**
le dispositif est configuré de telle sorte que pour le cas où les signaux vocaux reçus doivent être affectés à plusieurs locuteurs, au moins un autre dispositif de reconnaissance de la parole peut être affecté, qui présente substantiellement les mêmes fonctionnalités que le dispositif de reconnaissance de la parole (11) déjà compris dans le système de reconnaissance de la parole,
et avec lequel l'unité d'optimisation (10) est en communication de telle sorte que ceux des signaux vocaux lui sont amenés qui proviennent des directions spatiales qui sont affectées à au moins l'un des locuteurs multiples.
